# EUROPÄISCHE PATENTSCHRIFT

(11) **EP 1 218 574 B1**
(45) Veröffentlichungstag und Bekanntmachung des Hinweises auf die Patenterteilung: **03.03.2004**
(21) Anmeldenummer: 00978962.9
(22) Anmeldetag: 29.09.2000
(51) Int. Cl.: D01F 2/00, C08J 5/18, C08L 1/02

(54) **VERFAHREN UND VORRICHTUNG ZUR HERSTELLUNG VON CELLULOSISCHEN FORMKÖRPERN**
METHOD AND DEVICE FOR PRODUCING CELLULOSED SHAPED BODIES
PROCEDE ET DISPOSITIF POUR PRODUIRE DES CORPS FA ONNES CELLULOSIQUES

(30) Priorität: 06.10.1999 DE 19947910; 15.10.1999 DE 19949726
(43) Veröffentlichungstag der Anmeldung: 03.07.2002
(73) Patentinhaber: Zimmer AG, 60388 Frankfurt am Main (DE)
(72) Erfinder: NIEMZ, Frank-Günter, 07407 Rudolstadt (DE); MEYER, Wilhelm, 07407 Rudolstadt (DE); MAINZER ALTHOF, Tanja, 63571 Genhausen (DE)
(74) Vertreter: Brandenburg, Thomas, Dr.
(86) Internationale Anmeldenummer: PCT/DE2000/003410
(87) Internationale Veröffentlichungsnummer: WO 2001/025516

(56) Entgegenhaltungen:
- EP-A- 0 254 803
- WO-A-94/28212
- GB-A- 2 217 848

## Beschreibung

Die Erfindung betrifft ein Verfahren zur Herstellung von cellulosischen Formkörpern, bei dem man (a) Zellstoff und ein wasserhaltiges Aminoxid unter Bildung einer Suspension mischt, (b) aus der Suspension unter Wasserverdampfung eine Celluloselösung bildet, (c) eine erste Eigenschaft bzw. ein physikalisches Verhalten der gebildeten Celluloselösung mißt und den Meßwert für eine Korrektur der Lösungszusammensetzung benutzt, und (d) die Celluloselösung durch einen Luftspalt in ein wässriges Fällbad extrudiert und dort zu Formkörpern koaguliert, die weitere Behandlungsstufen durchlaufen können. Die Erfindung betrifft auch eine Vorrichtung zur Durchführung dieses Verfahrens mit einem mit Dosierorganen bestückten Anmaischeapparat, einer an den Anmaischeapparat angeschlossenen Löse- und Verdampfungseinrichtung und einer an die Löse- und Verdampfungseinrichtung über eine Leitung angeschlossenen Extrusionseinrichtung mit nachgeschaltetem Fällbad. Wenn in dieser Anmeldung generell von einer zu messenden Eigenschaft der Celluloselösung gesprochen wird, soll darunter auch ein physikalisches Verhalten der Lösung fallen, das gemessen werden kann.

Die Eigenschaften der nach dem Aminoxidverfahren hergestellten cellulosischen Formkörper, insbesondere die textilphysikalisehen Eigenschaften der ersponnenen Fasern und Filamente hängen in starkem Maße von der Zusammensetzung der Spinnlösung ab. Zur Einhaltung optimaler Eigenschaften ist es daher erwünscht, die Zusammensetzung der Spinnlösung zu überwachen und Schwankungen in engen Grenzen zu halten. Aus WO 94/28212 ist es bekannt, von Zeit zu Zeit eine Probe der dem Extrusionsapparat zufließenden Spinnlösung zu entnehmen und ihren Brechungsindex zu messen, der bei 60°C in dem Bereich von 1,4890 bis 1,491 liegen soll, damit zufriedenstellende Extrusionsprodukte erhalten werden. Außer dieser diskontinuierlichen Überwachung ist auch eine kontinuierliche Meßeinrichtung in der Leitung z.B. mit einem Prozess-Refraktometer angegeben. Bei einem Brechungsindex der Spinnlösung außerhalb des genannten Bereiches sollen die Beschickung zu dem Vor-Mischer und/oder die Verdampferbedingungen neu eingestellt werden.

Die Spinnlösung ist ein ternäres Gemisch aus Cellulose, Aminoxid und Wasser; ihre Zusammensetzung kann daher nicht durch die Messung nur einer Eigenschaft der Spinnlösung genau festgestellt werden. Einem bestimmten Brechungsindex kann vielmehr eine Vielzahl von Lösungszusammensetzungen zugeordnet werden, die im Dreiecksdiagramm des ternären Systems innerhalb des Lösungsgebiets liegen. Durch die Brechungsindexmessung alleine ist daher keine genaue Konzentrationsregelung der Spinnlösung erreichbar, abgesehen davon, daß dem genannten Bereich des Brechungsindex ohnehin keine bestimmte Lösungszusammensetzung zukommt.

Der vorliegenden Erfindung liegt die Aufgabe zugrunde, ein Verfahren zur Herstellung von cellulosischen Formkörpern nach dem Aminoxid-Verfahren zu schaffen, bei dem die Zusammensetzung der Spinnlösung genau überwacht werden kann. Insbesondere soll die Zusammensetzung der Spinnlösung genau festgestellt werden, so daß schon kleine Abweichungen von einem vorgegebenen Sollwert zur Korrektur der Lösungszusammensetzung benutzt werden können. Darüber hinaus soll ein Verfahren zur Herstellung von cellulosischen Formkörpern nach dem Aminoxid-Verfahren geschaffen werden, bei dem die Zusammensetzung der Spinnlösung mit möglichst geringer Verzögerung bzw. geringer Totzeit geregelt wird, damit auftretende Schwankungen der Zusammensetzung schnell eliminiert bzw. in engen Grenzen gehalten werden. Schließlich soll auch eine Vorrichtung zur Durchführung des Verfahrens geschaffen werden, durch die Änderungen der Spinnlösungszusammensetzung z.B. infolge Änderungen in der Zusammensetzung der Einsatzstoffe schnell eliminiert werden können. Weitere Vorteile ergeben sich aus der nachfolgenden Beschreibung.

Diese Aufgabe wird bei dem eingangs genannten Verfahren erfindungsgemäß dadurch gelöst, daß man in der Stufe (c) eine zweite von der ersten Eigenschaft verschiedene Eigenschaft der gebildeten Spinnlösung mißt, aus den Meßwerten beider Eigenschaften die Ist-Zusammensetzung der Lösung berechnet und deren Abweichung von einer Soll-Zusammensetzung für die Regelung der Lösungszusammensetzung benutzt.

Im Gegensatz zu dem bekannten Verfahren nach WO 94/28212 werden zwei Eigenschaften der Spinnlösung gemessen, wodurch es möglich ist, aus den Meßwerten die Zusammensetzung der Spinnlösung genau zu berechnen. Dabei werden die beiden Eigenschaften der reinen Komponenten Cellulose, Aminoxid und Wasser teils als bekannt vorausgesetzt. Wenn sie nicht bekannt sind, müssen sie experimentell festgestellt, evtl. auch durch Extrapolation ermittelt werden. Aus der erfindungsgemäßen Messung der beiden Lösungseigenschaften resultiert die genaue Zusammensetzung der Lösung. Es kann daher schon bei geringen Abweichungen von einer gewünschten Soll-Zusammensetzung der Lösung in die Dosierung der Lösungskomponenten zur Lösungsbereitung oder in den Betrieb der Lösungsbildung eingegriffen werden, um der Abweichung entgegenzuwirken. Das erfindungsgemäße Verfahren erlaubt daher eine wesentlich striktere Regelung der Lösungszusammensetzung als sie möglich ist, wenn nur der Brechungsindex alleine überwacht wird und die Regelung erst aktiviert wird, wenn der vorgegebene Toleranzbereich des Brechungsindex überschritten wird.

Im erfindungsgemäßen Verfahren sind die beiden Eigenschaften der Spinnlösung auszuwählen aus der Dielektrizitätskonstanten, der induktiven Leitfähigkeit, der Mikrowellenabsorption, dem Brechungsindex, der Dichte, dem Wassergehalt und der Ultraschallgeschwindigkeit. Besonders eignen sich der Brechungsindex und die Dichte der Lösung als zu messende Eigenschaften. Die Dichte kann radiometrisch oder mittels Corioliskraftsensor gemessen werden. Der Wassergehalt kann nach der Karl-Fischer-Methode bestimmt werden.

Nach der bevorzugten Ausführungsform des erfindungsgemäßen Verfahrens mißt man die Temperatur der Celluloselösung bei oder kurz vor oder nach der Messung der genannten Eigenschaften und kompensiert man die Meßwerte der beiden Lösungseigenschaften bzw. des physikalischen Verhaltens und kompensiert die Meßwerte aufgrund der Meßtemperatur. Da die Temperatur der Spinnlösung unterschiedlich sein kann, müssen die Meßwerte auf die Bezugstemperatur umgerechnet werden, bei der die Eigenschaftswerte bzw. Verhaltenswerte der Spinnlösung von Soll-Zusammensetzung bekannt sind, mit denen die Meßwerte zu vergleichen sind. Diese Bezugstemperatur, auf die die Meßwerte umgerechnet werden, ist beispielsweise 50°C oder 60°C.

Vorzugsweise mißt man wenigstens eine der beiden Eigenschaften der Spinnlösung in-line. Die in-line-Messungen erlauben nicht nur eine schnelle Ermittlung der Lösungszusammensetzung, sondern sie vermindern auch das durch die Zersetzlichkeit der Lösung bedingte Sicherheitsrisiko durch das mögliche Einsetzen unbeherrschbarer Run-away-Reaktionen.

Bei einer Ausführungsform des erfindungsgemäßen Verfahrens greift man zur Regelung der Lösungszusammensetzung in die Dosierung der Komponenten in der oben genannten Stufe (a) ein. Wird z.B. eine Änderung der Cellulosekonzentration der Spinnlösung festgestellt, so ist ein Eingriff in das Dosiersystem notwendig. Die Ursachen können in einer Änderung des Wassergehalts des eingesetzten Zellstoffs oder des Lösungsmittelgemisches N-Methylmorpholin-N-oxid (NMMO)/H₂O liegen.

Bei einer anderen Ausführungsform greift man zur Regelung der Lösungszusammensetzung in die Betriebsbedingungen der Stufe (b) ein. Ergeben die Messungen eine Verschiebung des Verhältnisses NMMO/H₂O, so kann dies in der Stufe (b) korrigiert werden, indem z.B. die Wasserverdampfung in dieser Stufe gedrosselt oder verstärkt wird.

Die Aufgabe wird ferner bei der eingangs genannten Vorrichtung erfindungsgemäß dadurch gelöst, daß in der Leitung zwischen der Lösungs- und Verdampfungseinrichtung und der Extrusionseinrichtung zur Messung von zwei verschiedenen Eigenschaften der Lösung ein Meßaggregat angeordnet ist, das Teil wenigstens eines Regelkreises zur Regelung der Spinnlösungszusammensetzung ist. Das Meßaggregat in der Leitung zwischen der Lösungsherstellung und der Lösungsextrusion liefert die Signale, wie z.B. den Brechungsindex und die Dichte der Lösung, durch die eine Veränderung der Stellgrößen, z.B. der Dosiergeschwindigkeiten für Cellulose und/oder Lösungsmittel, oder der Geschwindigkeit der Wasserverdampfung in der Löseeinrichtung hervorgerufen wird. Das Meßaggregat umfaßt zwei Geräte zur Messung der unterschiedlichen Lösungseigenschaften. Die Meßgeräte können hintereinander oder parallel geschaltet sein. Sie sind in jedem Falle in der Leitung angeordnet und liefern daher die Meßergebnisse ohne zeitliche Verzögerung, wodurch die Totzeit des Regelkreises und damit die Schwankungen der Lösungszusammensetzung minimiert werden.

Vorzugsweise umfaßt das Meßaggregat ein Gerät zur Messung der Lösungstemperatur und zur Kompensation der Meßwerte der genannten Meßgeräte. Das Meßaggregat liefert daher schon temperaturkompensierte Meßwerte der beiden Eigenschaften, so daß ein unmittelbarer Vergleich mit den auf eine bestimmteTemperatur bezogenen Eigenschaftswerten der Spinnlösung von Sollzusammensetzung möglich ist.

Zweckmäßigerweise bildet das Meßaggregat zusammen mit einem Mikroprozessor und den Dosierorganen oder der Löse- und Verdampfungseinrichtung wenigstens einen Regelkreis. Als Stellgrößen dienen dabei z.B. die Dosiergeschwindigkeiten der Dosierorgane bzw. die Geschwindigkeit der Wasserverdampfung in der Löseeinrichtung.

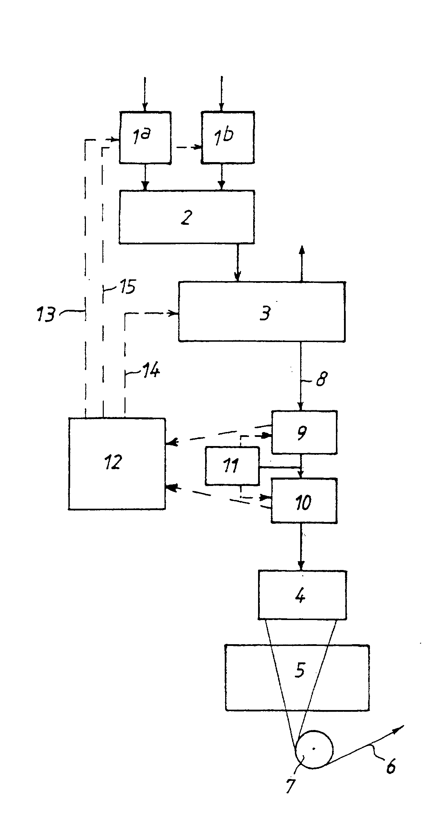

Die Erfindung wird nachfolgend an Hand der Zeichnung und einiger Versuche näher erläutert.

Die einzige Figur zeigt das schematische Fließbild einer Ausführungsform der erfindungsgemäßen Vorrichtung.

Wasserhaltiger Zellstoff und ein NMMO/H₂O-Gemisch werden durch ein Dosiersystem 1 in einen kontinuierlichen Anmaischeapparat 2 eingeführt. Der Apparat 2 kann ein Mehrwellenapparat sein, wie er in DE-C 198 37 210.8 beschrieben wurde. Dem Apparat 2 ist eine Löseeinrichtung 3 nachgeschaltet, in der die in 2 gebildete Suspension durch Wärmezufuhr und Unterdruck unter Wasserverdampfung in eine Lösung überführt wird. Ein geeignetes Verfahren hierzu ist aus DE-A 44 41 468.8 bekannt. An die Löseeinrichtung 3 schließt sich über eine Leitung 8 ein Extrusionswerkzeug 4 an, durch das die Spinnlösung über einen Luftspalt in ein Fällbad 5 extrudiert wird. Je nach Art und Beschaffenheit des Extrusionswerkzeugs 4 und der folgenden Operationen können Folien, Fasern, Filamente oder andere Formkörper erhalten werden. Der so entstandene Formkörper 6 wird über ein Abzugsorgan 7 weiteren Behandlungen, wie z.B. Auswaschen des Aminoxids, Nachbehandlung, Schneiden, Trocknen, zugeführt.

Erfindungsgemäß ist in der Leitung 8 zwischen der Löseeinrichtung 3 und dem Extrusionswerkzeug 4 ein Meßaggregat 9-11 angeordnet. Dieses besteht aus einem Meßgerät 9 zur Messung einer ersten Eigenschaft der Lösung und einem Meßgerät 10 zur Messung einer zweiten, von der ersten Eigenschaft verschiedenen Eigenschaft der Spinnlösung sowie einem Gerät 11 zur Messung der Temperatur der Spinnlösung in der Leitung 8 zwischen den Meßgeräten 9 und 10. Wie ersichtlich, sind die Meßgeräte 9 und 10 strömungsmäßig hintereinandergeschaltet. Die Meßgeräte 9 und 10 liefern bereits aufgrund der durch Gerät 11 gemessenen Temperatur korrigierte Signale an einen Mikroprozessor 12. Der Mikroprozessor 12 berechnet aus den von den Geräten 9 und 10 erhaltenen Signalen die Ist-Zusammensetzung der Lösung in Leitung 8, bildet die Differenz zur eingegebenen Soll-Zusammensetzung der Spinnlösung und errechnet aus dieser Differenz die Stellgrößen für die Dosierorgane 1^{a},1^{b} und/oder die Betriebsbedingungen der Löseeinrichtung 3. Die von dem Mikroprozessor 12 berechneten Stellbefehle gehen über eine der Signalleitungen 13,14,15 oder mehrere Signalleitungen an die betreffenden Stellorgane. Es ist ersichtlich, daß durch die erfindungsgemäße Regelung, insbesondere die unmittelbare Temperaturkompensation der beiden Meßwerte bei einer Abweichung der Lösungszusammensetzung in der Leitung 8 von dem Sollwert eine schnelle Korrektur möglich ist, insbesondere da keine Temperatureinstellung einer abgezogenen Probe nötig ist.

### Versuch 1

In einer kontinuierlich arbeitenden Anlage zur Erspinnung von Lyocell-Stapelfasern entsprechend der Figur wurde in die Spinnlösungsleitung unmittelbar nach dem Löseapparat ein Meßkomplex eingebaut aus einem Durchstrahlungs- Prozessrefraktometer RIS 60-3 der Firma Risens GmbH, Jena, und einem radiometrischen Dichtemeßgerät LB 386 der Firma EG & E Bertold, Bad Wildbad. Die Messungen des Brechungsindexes und der Dichte wurden jeweils auf 50°C temperaturkompensiert. Aus den so erhaltenen Meßwerten wurde die prozentuale Zusammensetzung der Spinnlösung berechnet. Unmittelbar hinter dem Meßkomplex wurde aus der Leitung durch einen Probenahmestutzen eine Probe gezogen und auf den Cellulosegehalt (Ausfällmethode) und den Wassergehalt (Karl-Fischer-Titration) untersucht. Die erhaltenen berechneten Werte der Zusammensetzung und die Analysewerte für Cellulose und Wasser sind in der Tabelle angegeben. Es ergibt sich eine gute Übereinstimmung zwischen der aus den beiden gemessenen Eigenschaften der Lösung berechneten Zusammensetzung und der analytisch bestimmten Zusammensetzung.

### Versuch 2

Die Ausgangsbedingungen waren wie bei dem Versuch 1. Dann wurden jedoch im Löseapparat 3 die Verdampfungsbedingungen so geändert, daß ein stärkeres Abdampfen des Wassers erfolgte. Hierzu wurde das Vakuum im Löseapparat bei konstantem Temperaturprofil und konstanten Verhältnisses Cellulose/NMMO/H₂O in der Maische erhöht. Die aus der Spinnlösung erhaltenen Meßgrößen der Eigenschaften, die daraus errechneten Gehalte an Cellulose, NMMO und Wasser sowie die analytisch ermittelten Gehalte an Wasser und Cellulose sind in der Tabelle angegeben. Es ist ersichtlich, daß der vorgenommene Eingriff in die Verdampfung durch die aus den Lösungseigenschaften berechneten Daten in gleicher Weise feststellbar ist wie durch die unmittelbaren Analysenwerte.

### Versuch 3

Ausgehend von den eingestellten Bedingungen des Versuchs 2 wurden bei konstanten Bedingungen im Löseapparat die Parameter der Maischeherstellung zeitlich so geändert, daß das Verhältnis Cellulose/NMMO/H₂O zugunsten der Cellulose erhöht wurde. Die sich einstellenden Verhältnisse am Ausgang des Löseapparats nach jeweils 35, 45 und 50 Minuten wurden durch die aufgrund der Eigenschaftsmessungen des Meßkomplexes berechneten prozentualen Gehalte und durch unmittelbare Analyse wie in Versuch 1 festgestellt und in der Tabelle unter 3a, 3b bzw. 3c angegeben. An Hand dieser Daten ist ersichtlich, daß zeitliche Änderungen der Zusammensetzung der Spinnlösung aufgrund der Messung der beiden Lösungseigenschaften sehr genau berechnet werden können.

Die Versuchsergebnisse zeigen, daß aus den Meßwerten von zwei Eigenschaften der Spinnlösung die Lösungszusammensetzung mit großer Genauigkeit berechnet werden kann, so daß eine enge Regelung der Zusammensetzung der Spinnlösung möglich ist. Da die berechneten Werte praktisch verzögerungsfrei verfügbar sind, erlaubt das Verfahren eine Einschränkung der Zusammensetzungsschwankungen und damit auch eine Einengung der Schwankungen der physikalischen Eigenschaften des gebildeten Formkörpers.

| Versuch Nr. | Durch den Meßkomplex gemessene Werte, auf 50°C temperaturkomp. | | Aus den Meßwerten berechnete Werte Masse-% | | | Analysenwerte Masse-% | |
|---|---|---|---|---|---|---|---|
| | Brechungsindex | Dichte g/ml | Cellulose | NMMO | Wasser | Cellulose | Wasser |
| 1 | 1,4847 | 1,2073 | 12,00 | 73,11 | 14,89 | 11,95 | 15,02 |
| 2 | 1,4885 | 1,2127 | 12,30 | 74,90 | 12,80 | 12,32 | 12,75 |
| 3a | 1,4890 | 1,2144 | 12,69 | 74,56 | 12,75 | 12,70 | 12,72 |
| 3b | 1,4895 | 1,2162 | 13,13 | 74,18 | 12,69 | 13,17 | 12,70 |
| 3c | 1,4897 | 1,2168 | 13,28 | 74,05 | 12,67 | 13,25 | 12,68 |

## Patentansprüche

1. Verfahren zur Regelung der Zusammensetzung von Lösung(en) bei der Herstellung von cellulosischen Formkörpern, bei dem man
(a) Zellstoff und ein wasserhaltiges Aminoxid unter Bildung einer Suspension mischt,
(b) aus der Suspension unter Wasserverdampfung eine Celluloselösung bildet,
(c) eine erste Eigenschaft oder ein physikalisches Verhalten der gebildeten Celluloselösung mißt und den Meßwert für eine Korrektur der Lösungszusammensetzung benutzt, und
(d) die Celluloselösung durch einen Luftspalt in ein wäßriges Fällbad extrudiert und dort zu Formkörpern koaguliert, die weitere Behandlungsstufen durchlaufen können,
**dadurch gekennzeichnet, daß** man
in der Stufe (c) eine zweite von der ersten Eigenschaft verschiedene Eigenschaft der gebildeten Celluloselösung mißt,
aus den Meßwerten beider Eigenschaften die Ist-Zusammensetzung der Lösung berechnet und deren Abweichung von einer Soll-Zusammensetzung für die Regelung der Lösungszusammensetzung benutzt, wobei weiterhin gilt, daß man die beiden Eigenschaften der Celluloselösung unter Dielektrizitätskonstanten, der induktiven Leitfähigkeit, der Mikrowellenabsorption, dem Brechungsindex, der Dichte, dem Wassergehalt und der Ultraschallgeschwindigkeit auswählt.

2. Verfahren nach Anspruch 1 **dadurch gekennzeichnet, daß** man die Temperatur der Celluloselösung bei oder kurz vor oder nach der Messung der Eigenschaften mißt und die Meßwerte der beiden Eigenschaften aufgrund der Meßtemperatur kompensiert.

3. Verfahren nach einem der Ansprüche 1 oder 2 **dadurch gekennzeichnet, daß** man wenigstens eine der beiden Eigenschaften in-line mißt.

4. Verfahren nach einem der Ansprüche 1 bis 3 **dadurch gekennzeichnet, daß** man zur Regelung der Lösungszusammensetzung in die Dosierung der Suspensionskomponenten in die Stufe (a) eingreift.

5. Verfahren nach einem der Ansprüche 1 bis 4 **dadurch gekennzeichnet, daß** man zur Regelung der Lösungszusammensetzung in die Betriebsbedingungen der Stufe (b) eingreift.

6. Vorrichtung zur Durchführung des Verfahrens nach einem der Ansprüche 1 bis 5, mit einem mit Dosierorganen (1^{a}, 1^{b})bestückten Anmaischeapparat (2), einer an den Anmaischeapparat (2) angeschlossenen Löse- und Verdampfungseinrichtung (3) und einer an die Löse- und Verdampfungseinrichtung(3) über eine Leitung (8) angeschlossenen Extrusionseinrichtung (4) mit einem nachgeschalteten Fällbad(5), **dadurch gekennzeichnet, daß** in der Leitung (8) zur Meßung von zwei verschiedenen Eigenschaften der Celluloselösung, die ausgewählt werden unter Dielektrizitätskonstanten, der induktiven Leitfähigkeit, der Mikrowellenabsorption, dem Brechungsindex, der Dichte, dem Wassergehalt und der Ultraschallgeschwindigkeit, ein Meßaggregat (9-11) angeordnet ist, das Teil wenigstens eines Regelkreises zur Regelung der Spinnlösungszusammensetzung ist.

7. Vorrichtung nach Anspruch 6 **dadurch gekennzeichnet**, daßdas Meßaggregat zwei Geräte (9, 10) zur Messung verschiedener Lösungseigenschaften umfasst.

8. Vorrichtung nach Anspruch 7 **dadurch gekennzeichnet, daß** das Meßaggregat ein Gerät (11) zur Messung der Lösungstemperatur und eine Temperaturkompensation der Meßwerte in den Geräten (9, 10) umfasst.

9. Vorrichtung nach einem der Ansprüche 6 bis 8 **dadurch gekennzeichnet, daß** das Meßaggregat (9-11) zusammen mit einem Mikroprozessor (12) und den Dosierorganen (1^{a}, 1^{b}) oder der Löse-und Verdampfungseinrichtung (3) Regelkreise bildet.

## Claims

1. Process for controlling the composition of solution(s) in the production of cellulosic shaped bodies , comprising,
(a) mixing cellulose pulp and a water-containing aminoxide, to form a suspension,
(b) forming a cellulose solution from the suspension by evaporation of water,
(c) measuring a first property or physical behaviour of the formed cellulose solution, and using the measured value for a correction of the composition of the solution, and
(d) extruding the cellulose solution through an air gap into an aqueous precipitation bath where it is coagulated to form shaped bodies, that are capable of undergoing further processing steps,
**characterized in that**,
in step (c), a second property of the formed cellulose solution, which is diffrent from the first property, is measured, the actual composition of the solution is calculated from the measured values of those properties, and their deviation from a reference composition is used to adjust the composition of the solution, and furthermore the first and second properties of the cellulose solution are selected from the group consisting of relative permittivity, inductive conductivity, microwave absorbtion, refractive index, density, water content and ultrasonic speed.

2. Process according to claim 1, **characterized in that**, the temperature of the cellulose solution is measured during or shortly before or after the measurement of the first and second properties and the measured values of the first and second properties are adjusted on the basis of the measured temperature.

3. Process according any of the claims 1 to 2, **characterized in that**, at least one of said both properties is measured in-line.

4. Process according any of the claims 1 to 3, **characterized in that**, the solution composition is adjusted by intervention in the dosing of the suspension components of step (a).

5. Process according to any of the claims 1 to 4, **characterized in that**, the solution composition is adjusted by intervention in the operating conditions of step (b).

6. Device for perfoming the process according to any of the claims 1 to 5, comprising a mixing apparatus (2) equipped with metering elements (1^{a}, 1^{b}),
dissolving and evaporating device (3) connected to the mixing-apparatus (2) and an extrusion device (4) connected via line (8) with the dissolving and evaporation device (3), comprising a downstream precipitation bath (5),
**characterized in that**, the measuring device (9-11) is arranged in the line (8) for measuring two different properties of the solution selected from the group consisting of relative permittivity, inductive conductivity, microwave absorbtion, refractive index, density, water content and ultrasonic speed; which is a part of at least one regulating circuit for adjusting the composition of the cellulose solution.

7. Device according to claim 6, **characterized in that**, the measuring device comprises two devices (9, 10) for measuring different solution properties.

8. Device according to claim 7, **characterized in that**, the measuring device comprises a temperature measuring instrument (11) for measuring the temperature of the solution and to compensate for temperature in the measured values of measuring devices (9, 10).

9. Device according to any of the claims 6 to 8, **characterized in that**, the measuring device (9-11), together with a microprocessor (12) and the metering elements (1^{a}, 1^{b}) or the dissolving and evaporating device (3), form a controlling circuit.

## Revendications

1. Procédé pour réguler la composition de solution(s) lors du formage de corps cellulosiques, par lequel
(a) on mélange de la cellulose avec un oxyde d'amine aqueux par mise en suspension,
(b) on forme par évaporation d'eau une solution de cellulose à partir de la solution en suspension,
(c) on mesure une première propriété ou un comportement physique de la solution de cellulose ainsi obtenue et on utilise la valeur mesurée pour corriger la composition de la solution, et
(d) on extrude la solution de cellulose à travers une fente dans un bain de précipitation aqueux où elle coagule pour former des corps qui peuvent subir d'autres étapes de traitements,
**caractérisé en ce que**
l'on mesure dans l'étape (c) une deuxième propriété de la solution de cellulose obtenue, différente de la première,
l'on calcule la composition réelle de la solution à partir des valeurs mesurées des deux propriétés et l'on utilise l'écart entre la composition réelle et la composition de référence pour réguler la composition de la solution, les deux propriétés de la solution de cellulose étant par ailleurs choisies parmi les constantes diélectriques, la conductivité inductive, l'absorption hyperfréquence, l'indice de réfraction, la densité, la teneur en eau et la vitesse ultrasonique.

2. Procédé selon la revendication 1, **caractérisé en ce que** l'on mesure la température de la solution de cellulose en même temps que les propriétés, ou peu avant ou après celles-ci, et que l'on compense les valeurs mesurées des deux propriétés en fonction de la température mesurée.

3. Procédé selon l'une quelconque des revendications 1 ou 2, **caractérisé en ce que** l'on mesure au moins l'une des deux propriétés en ligne.

4. Procédé selon l'une quelconque des revendications 1 à 3, **caractérisé en ce que** l'on intervient dans le dosage des composants en suspension à l'étape (a) pour réguler la composition de la solution.

5. Procédé selon l'une quelconque des revendications 1 à 4, **caractérisé en ce que** l'on intervient dans les conditions opératoires de l'étape (b) pour réguler la composition de la solution.

6. Dispositif pour la mise en oeuvre du procédé selon l'une quelconque des revendications 1 à 5, avec un malaxeur (2) équipé d'organes de dosage (1^{a}, 1^{b}), un système de mise en solution et d'évaporation (3) connecté au malaxeur (2) et un système d'extrusion (4) qui est équipé d'un bain de précipitation (5) monté en amont de celui-ci et est connecté par une conduite (8) au système de mise en solution et d'évaporation (3), **caractérisé en ce qu'**un bloc de mesure (9-11) formant partie d'au moins une boucle de régulation destinée à réguler la composition de la solution de filage est disposé dans la conduite (8) pour mesurer deux propriétés différentes de la solution de cellulose choisies parmi les constantes diélectriques, la conductivité inductive, l'absorption hyperfréquence, l'indice de réfraction, la densité, la teneur en eau et la vitesse ultrasonique.

7. Dispositif selon la revendication 6, **caractérisé en ce que** le bloc de mesure comporte deux appareils (9, 10) destinés à mesurer diverses propriétés d'une solution.

8. Dispositif selon la revendication 7, **caractérisé en ce que** le bloc de mesure comporte un appareil (11) destiné à mesurer la température de la solution et une compensation de température des valeurs mesurées dans les appareils (9, 10).

9. Dispositif selon l'une quelconque des revendications 6 à 8, **caractérisé en ce qu'**avec le microprocesseur (12) et les organes de dosage (1^{a}, 1^{b}) ou avec le système de mise en solution et d'évaporation (3), le bloc de mesure (9-11) forme des boucles de régulation.
